# EUROPÄISCHE PATENTSCHRIFT

(11) **EP 3 369 586 B1**
(45) Veröffentlichungstag und Bekanntmachung des Hinweises auf die Patenterteilung: **07.04.2021**
(21) Anmeldenummer: 18159181.9
(22) Anmeldetag: 28.02.2018
(51) Int. Cl.: B42D 25/48, B42D 25/23, B42D 25/24, B42D 25/29, G06K 13/077, G06K 13/08, B65H 5/18, B65H 5/10

(54) **VORRICHTUNG UND VERFAHREN ZUR QUALITÄTSPRÜFUNG**
DEVICE AND METHOD FOR QUALITY REVIEW
DISPOSITIF ET PROCÉDÉ DE CONTRÔLE DE LA QUALITÉ

(30) Priorität: 02.03.2017 DE 102017203402
(43) Veröffentlichungstag der Anmeldung: 05.09.2018
(73) Patentinhaber: Bundesdruckerei GmbH, 10969 Berlin (DE)
(72) Erfinder: Radtke, Patrick, 12437 Berlin (DE); Schippan, Frank, 10247 Berlin (DE); Leopold, André, 10119 Berlin (DE); Gümmer, Andreas, 27308 Hohenaverbergen (DE)
(74) Vertreter: Patentanwälte Bressel und Partner mbB

(56) Entgegenhaltungen:
- WO-A1-2007/085115
- WO-A1-2014/131523
- DE-A1- 19 526 087
- DE-A1-102014 000 934

## Beschreibung

Die Erfindung betrifft eine Vorrichtung und ein Verfahren zur Qualitätsprüfung eines dokumentenartigen Prüfkörpers.

Nach Zwischenschritten oder nach der finalen Herstellung eines Produkts erfolgt in der Regel eine Qualitätsprüfung des Zwischen- oder Endprodukts. Hierdurch wird eine gewünschte Qualität sichergestellt. Den Qualitätsanforderungen nicht genügende Zwischen- oder Endprodukte können aussortiert oder nachbearbeitet werden.

Bei der Herstellung von dokumentenartigen Prüfkörpern ist es üblich, eine optische Qualitätsprüfung vorzunehmen. Hierbei sind entsprechende Prüfungseinrichtungen entlang einer geraden Trajektorie angeordnet, wobei das Dokument entlang der geraden Trajektorie transportiert und dabei geprüft wird. Nachteilig ist hierbei der große Bauraum, der hierzu benötigt wird.

Die WO 2015/074987 A1 offenbart eine Spreizvorrichtung zum Aufschlagen eines Identifikationsdokumentes.

Die DE 100 63 313 A1 offenbart einen bewegten Träger mit Haltevorrichtungen zum Erfassen und Festhalten einer Karte.

Die DE 10 2013 101 925 A1 offenbart ein Verfahren zur Positionierung eines Sicherheitsdokumentes in einer Prüfvorrichtung zur Prüfung von zumindest einem Sicherheits- und/oder Qualitätsmerkmal des Sicherheitselementes sowie eine Transportfördereinrichtung für Sicherheitsdokumente, durch welche die Sicherheitsdokumente der Prüfvorrichtung zugeführt werden.

Die DE 10 2013 101 622 A1 offenbart eine Lese/Schreibeinrichtung für Chipkarten, mit einer Halterung für einen Modulträger und einem Modulträger mit zumindest einem elektronischen Modul zur Kommunikation mit der Chipkarte, welcher aus der Halterung herausnehmbar ist.

Die DE 10 2014 000 934 A1 offenbart ein Verfahren und eine Vorrichtung zum Testen einer kontaktlosen Datenübertragung mindestens einer Chipkarte, welche für eine kontaktlose Datenübertragung eingerichtet ist, mittels eines Kartenlesers, welcher zum kontaktlosen Lesen und Schreiben von Daten auf Chipkarten eingerichtet ist.

Die DE 195 26 087 A1 offenbart eine Vorrichtung zur Bearbeitung von Ausweiskarten und/oder Rohlingen solcher Ausweiskarten.

Die WO 2007/085115 A1 offenbart Technologien zur Herstellung von Dokumentenkerneinlagen.

Es stellt sich das technische Problem, eine Vorrichtung und ein Verfahren zur Qualitätsprüfung eines dokumentenartigen Prüfkörpers zu schaffen, die einen für die Qualitätsprüfung erforderlichen Bauraum minimieren.

Die Lösung des technischen Problems ergibt sich durch die Gegenstände mit den Merkmalen der Ansprüche 1 und 14. Weitere vorteilhafte Ausgestaltungen der Erfindung ergeben sich aus den Unteransprüchen.

Vorgeschlagen wird eine Vorrichtung zur Qualitätsprüfung eines dokumentenartigen Prüfkörpers. Der dokumentenartige Prüfkörper kann insbesondere ein Wert- und/oder Sicherheitsdokument sein.

Als Wert- und/oder Sicherheitsdokument kann jedes Dokument bezeichnet werden, das eine physikalische Entität ist, die gegen ein unautorisiertes Herstellen und/oder Verfälschen durch Sicherheitsmerkmale oder -elemente geschützt sind. Sicherheitsmerkmale sind solche Merkmale, die ein Verfälschen und/oder Duplizieren gegenüber einem einfachen Kopieren zumindest erschweren. Physikalische Entitäten, die ein Sicherheitsmerkmal umfassen oder ausbilden, können als Sicherheitselemente bezeichnet werden. Ein Sicherheitsdokument kann mehrere Sicherheitsmerkmale und/oder Sicherheitselemente umfassen. Im Sinne der hier festgelegten Definition stellt ein Sicherheitsdokument auch immer ein Sicherheitselement dar. Beispiele für Sicherheitsdokumente, welche auch Wertdokumente umfassen, die einen Wert repräsentieren, umfassen beispielsweise Reisepässe, Personalausweise, Führerscheine, Identitätskarten, Zutrittskontrollausweise, Krankenkassenkarten, Banknoten, Postwertzeichen, Bankkarten, Kreditkarten, Smartcards, Tickets und Etiketten.

Der Prüfkörper kann ein gewünschtes Format aufweisen, beispielsweise ein ID1-Format, ein ID2-Format oder ein ID3-Format. Vorzugsweise, aber nicht zwingend, ist der Prüfkörper ein buchartiger Prüfkörper. Ein buchartiger Prüfkörper kann einen Einbandteil sowie einen Buchblockteil umfassen, wobei der Einbandteil den Buchblockteil im geschlossenen Zustand des buchartigen Prüfkörpers umgibt. Der Einbandteil kann im fertig hergestellten Zustand den Bucheinband ausbilden. Der Einbandteil kann z.B. aus einem Kunststoff, z.B. einem Polymer, bestehen. Weiter kann der Einbandteil aus einem Polymer-Faserverbund bestehen. Dieser kann z.B. ein Gewebe, Fließ oder Papier als Trägermaterial umfassen, welche beispielsweise mit Latex und Stärke gefüllt ist. Weiter kann der Einbandteil eine Dekordeckschicht aus Acrylat oder PVC aufweisen. Auf einer Außenseite des Einbandteils, insbesondere in einem Bereich, der im fertig hergestellten Zustand eine Vorderseite des buchartigen Prüfkörpers ausbildet, kann mindestens ein grafisches Element, beispielsweise eine Prägung, angeordnet sein.

Der Buchblockteil kann mindestens eine, vorzugsweise jedoch mehrere, Buchseiten bzw. Buchdoppelseiten umfassen. Eine Buchseite kann hierbei eine Datenseite oder eine Visaseite sein, wobei die Daten- bzw. Visaseite insbesondere zum Eintragen eines Visums dient. Vorzugsweise umfasst der Buchblockteil zusätzlich eine sogenannte Datenkarte oder Passkartenseite. Die Passkartenseite kann z.B. eine Kunststoffkarte oder eine Papierdatenseite sein, die ein oder vorzugsweise mehrere Sicherheitsmerkmale aufweist. Die Passkartenseite kann insbesondere eine zur Führung des Sicherheitsdokuments autorisierte Person identifizierende oder personalisierende Merkmale aufweisen. Beispielsweise kann die Passkartenseite ein Foto und personenspezifische Daten des Inhabers aufweisen oder Kodieren.

Weiter kann der Buchblockteil ein Vorsatzblatt oder Vorsatzpapier umfassen. Dieses Vorsatzblatt kann eine höhere Festigkeit als eine Daten- oder Visaseite aufweisen. Weiter kann das Vorsatzpapier nur einseitig bedruckt sein und die Innenseite des Einbandteils ausbilden, nachdem es mit der unbedruckten Seite an den Einbandteil geklebt wurde.

Vorzugsweise umfasst der Buchblockteil mehrere übereinander gelegte und zueinander ausgerichtete Doppelseiten, die miteinander verbunden sind. Diese Verbindung kann beispielsweise durch einen Faden erfolgen, mit dem die Doppelseiten vernäht sind. Ein solcher buchartiger Prüfkörper kann insbesondere ein Identifikationsdokument, insbesondere ein Reisedokument, z.B. ein Passbuch, sein, der dazu dient, eine Identität einer Person zu überprüfen. Derartige Reisedokumente werden von staatlichen Stellen in Ausübung ihrer hoheitlichen Aufgabe ausgegeben, beispielsweise um dem Dokumenteninhaber einen Grenzübertritt in einen anderen Staat zu ermöglichen.

Die Passkartenseite kann Daten aufweisen, die den Inhaber des Prüfkörpers individualisieren, z.B. einen Namen, ein Geburtsdatum und -ort, Staatsangehörigkeit, ein Gesichtsbild und die Unterschrift des Dokumenteninhabers. Ferner kann die Passkartenseite eine das Dokument identifizierende Seriennummer (Dokumentennummer), ein Ausgabedatum des Dokuments sowie Angaben über die ausstellende Behörde und den Typ des Passdokuments umfassen. Diese können auch als das Dokument identifizierende Daten bezeichnet werden. Weiter kann die Passkartenseite und/oder die Daten- oder Visaseiten mit diversen Sicherheitsmerkmalen ausgestattet sein, die es einem Dritten erlauben, die Echtheit des Prüfkörpers zu überprüfen.

Alternativ kann der Prüfkörper jedoch auch als Kartenkörper ausgebildet sein. Ein als Kartenkörper ausgebildeter Prüfkörper kann insbesondere ein Ausweisdokument, z.B. ein Personalausweis, sein. Auch ein solcher Kartenkörper kann Sicherheitsmerkmale aufweisen.

Derartige Sicherheitsmerkmale können beispielsweise einen Guillochendruck und eine Wiedergabe des Bundeswappens umfassen. Darüber hinaus können diese Prüfkörper auch individualisierende und/oder personalisierende Daten enthalten, z.B. Angaben über einen Wohnort und biometrische Daten, z.B. eine Größe, eine Augenfarbe des Dokumenteninhabers, Daten über das Ausstellungsdatum und -ort sowie eine Dokumentennummer. Die Dokumentennummer kann auch als Punkt- oder Laserperforation durch alle Seiten des buchartigen Prüfkörpers hindurch ausgebildet sein.

Weiter können verschiedene Prüfkörpertypen existieren. Beispielsweise können solche Prüfkörpertypen ein normaler Reisepass, ein vorläufiger Reisepass, ein Kinderreisepass, ein Diplomatenpass, ein Dienstpass, ein Ausländerpass, ein Pass für Flüchtlinge und ein Pass für Staatenlose umfassen. Hierbei können einzelne Typen keine Passkartenseite aufweisen, z.B. der Kinderreisepass und der vorläufige Reisepass. In diesem Fall können individualisierende Daten auf den Datenseiten angebracht sein. Im Falle des normalen Reisepasses kann es unterschiedlich umfangreiche Buchblockteile geben, z.B. Buchblockteile mit 16 bzw. 24 Datendoppelseiten. Weiter können sich deutsche Reisepässe durch eine Farbe des jeweiligen Einbandteils sowie durch unterschiedliche Arten der Einträge auf der Passkartenseite unterscheiden.

Die vorgeschlagene Vorrichtung umfasst mindestens eine Transporteinrichtung für den dokumentenartigen Prüfkörper. Weiter umfasst die Vorrichtung eine erste Prüfeinrichtung und erfindungsgemäß mindestens eine weitere Prüfeinrichtung. Vorzugsweise umfasst die Vorrichtung mehr als zwei Prüfeinrichtungen. Jede Prüfeinrichtung kann hierbei einen Erfassungsbereich aufweisen. Mittels der jeweiligen Prüfeinrichtung kann ein im Erfassungsbereich der Prüfeinrichtung angeordneter Prüfkörper geprüft werden.

Die Transporteinrichtung weist mindestens eine Auflagefläche für den Prüfkörper auf. Die Auflagefläche kann insbesondere eine ebene, also ungekrümmte Auflagefläche sein. Vorzugsweise weist die Transporteinrichtung mehrere Auflageflächen auf.

Weiter ist die Auflagefläche durch eine Rotation um eine Rotationsachse in eine erste Raumlage und in mindestens eine weitere Raumlage positionierbar. Dies bedeutet, dass die Auflagefläche sowohl in die erste Raumlage als auch in die weitere Raumlage bewegt werden kann. Somit kann sich die Auflagefläche in der ersten oder in der weiteren Raumlage befinden. Die erste und die mindestens eine weitere Raumlage können hierbei voneinander verschieden sein. Dies kann bedeuten, dass die erste und die weitere Raumlage in einem globalen Referenzkoordinatensystem eine voneinander verschiedene Position und/oder Orientierung aufweisen können. Die Position kann insbesondere die Position eines geometrischen Mittelpunkts der Auflagefläche in der jeweiligen Raumlage sein.

Weiter ist ein auf der Auflagefläche angeordneter Prüfkörper in der ersten Raumlage in einem Erfassungsbereich der ersten Prüfeinrichtung und erfindungsgemäß in der weiteren Raumlage in einem Erfassungsbereich der weiteren Prüfeinrichtung angeordnet. Dies bedeutet, dass die Prüfeinrichtungen derart angeordnet und/oder ausgebildet sind, dass sich der Prüfkörper in der entsprechenden Raumlage im Erfassungsbereich der jeweiligen Prüfeinrichtung befindet. Somit kann jeder Prüfeinrichtung eine Raumlage zugeordnet sein, in die der auf der Auflagefläche angeordnete Prüfkörper durch Rotation der Auflagefläche um die Rotationsachse positionierbar ist. Mit anderen Worten kann der auf der Auflagefläche angeordnete Prüfkörper durch Rotation in den Erfassungsbereich der entsprechenden Prüfeinrichtung bewegt werden.

Es ist z.B. vorstellbar, dass die Prüfeinrichtungen mit Bezug auf die Rotationsachse entlang voneinander verschiedenen Radialrichtungen angeordnet sind.

Die Vorrichtung kann weiter mindestens eine Steuer- und Auswerteeinrichtung umfassen. Die mindestens eine Steuer- und Auswerteeinrichtung kann hierbei selbstverständlich mehrere Teileinrichtungen umfassen. Beispielsweise kann die Steuer- und Auswerteeinrichtung oder eine Teileinrichtung als Mikrocontroller ausgebildet sein.

Mittels einer Prüfeinrichtung kann mindestens ein zu prüfendes Merkmal des Prüfkörpers (Prüfmerkmal) prüfbar sein. Die Prüfung kann das Erfassen und/oder Bestimmen des Prüfmerkmals und das Auswerten eines merkmalspezifischen Qualitätskriteriums umfassen. Eine gewünschte Qualität des Prüfkörpers kann beispielsweise detektierbar sein, wenn das geprüfte Prüfmerkmal nicht mehr als ein gewünschtes Maß von einem Soll-Merkmal abweicht. Dies kann z.B. der Fall sein, wenn eine oder mehrere Eigenschaft(en) des Prüfmerkmals nicht mehr als ein vorbestimmtes Maß von einer Soll-Eigenschaft abweichen. Eine fehlende Qualität kann detektierbar sein, falls das erfasste Prüfmerkmal mehr als das vorbestimmte Maß von dem Soll-Merkmal abweicht.

Beispielhafte Prüfmerkmale werden nachfolgend noch näher erläutert.

Die Steuer- und Auswerteeinrichtung kann hierbei den Transport durch die Transporteinrichtung steuern. Weiter kann die Steuer- und Auswerteeinrichtung die Prüfung durch die Prüfeinrichtungen steuern. Selbstverständlich kann die Steuer- und Auswerteeinrichtung Teil einer Prüfeinrichtung sein.

Der Transport des Prüfkörpers in Erfassungsbereiche verschiedener Prüfeinrichtungen durch eine Rotation ermöglicht in vorteilhafter Weise die Reduktion eines erforderlichen Bauraums der Vorrichtung, insbesondere zumindest einer Dimension, z.B. einer Länge oder einer Breite, der Vorrichtung.

Die vorgeschlagene Vorrichtung kann ein, insbesondere austauschbares, Bestandteil einer Produktionsanlage zur Herstellung von Wert- oder Sicherheitsdokumenten. Die Produktionsanlage kann hierbei neben der Vorrichtung noch weitere funktionelle Module umfassen, die die Prozessschritte ausführen können, die zur Herstellung eines Wert- oder Sicherheitsdokuments erforderlich sind. Weiter kann die Produktionsanlage eine oder mehrere Transportvorrichtung(en) umfassen, die einen Transport der Bestandteile bzw. des Wert- oder Sicherheitsdokuments in verschiedenen Herstellungszuständen zwischen den Modulen ermöglicht. Die gesamte Produktionsanlage kann hierbei in vorteilhafter Weise im Vergleich mit bisher existierenden Fertigungsstraßen sehr geringe geometrische Dimensionen aufweisen.

Erfindungsgemäß ist die Transporteinrichtung als Hohlkörper ausgebildet oder umfasst einen Hohlkörper. Insbesondere kann die Auflagefläche von einem Teilbereich einer Außenseite des Hohlkörpers ausgebildet werden. Ist die Transporteinrichtung als Prisma ausgebildet oder umfasst ein Prisma, so kann das Prisma als Hohl-Prisma ausgebildet sein.

Der Hohlkörper kann ein Innenvolumen aufweisen. In dem Innenvolumen können hierbei in vorteilhafter Weise weitere Bauteile der Vorrichtung angeordnet sein. Entsprechende Beispiele werden nachfolgend näher erläutert. Hierdurch wird in vorteilhafter Weise eine weitere Reduktion des von der Vorrichtung benötigten Bauraums erreicht.

In einer weiteren Ausführungsform umfasst die Vorrichtung mindestens eine Befestigungseinrichtung zur Befestigung des Prüfkörpers an der Auflagefläche. Die Befestigungseinrichtung kann insbesondere der mechanischen Befestigung des Prüfkörpers dienen. Mittels der Befestigungseinrichtung kann der Prüfkörper ortsfest relativ zur Auflagefläche an dieser befestigt werden. Weiter kann es möglich sein, den Prüfkörper in verschiedenen Zuständen an der Auflagefläche zu befestigen. Beispielsweise kann der Prüfkörper in einem aufgeklappten oder in einem geschlossenen Zustand an der Auflagefläche befestigt werden. Weiter kann der Prüfkörper mit verschiedenen Seiten an der Auflagefläche befestigt werden. Beispielsweise kann bei einem Prüfkörper in Kartenform die Vorder- oder Rückseite im befestigten Zustand an der Auflagefläche anliegen. Bei einem buchartigen Prüfkörper kann im geschlossenen Zustand ebenfalls eine Vorder- oder Rückseite des Einbandteils an der Auflagefläche anliegen. Im geöffneten Zustand kann der Prüfkörper mit Vorder- und Rückseite des Einbandteils an der Auflagefläche anliegen. Selbstverständlich ist es jedoch auch vorstellbar, dass der buchartige Prüfkörper im geöffneten Zustand derart an der Auflagefläche anliegt, dass Vorder- und Rückseite des Einbandteils nicht an der Auflagefläche anliegen. In diesem Fall kann eine Datendoppelseite oder eine Passkartenseite oder eine Vorsatzseite an der Auflagefläche anliegen.

Es ist z.B. vorstellbar, dass die Befestigungseinrichtung als Klemmeinrichtung ausgebildet ist. Dies wird nachfolgend noch näher erläutert. Die Vorrichtung kann auch mehrere Befestigungseinrichtungen, insbesondere voneinander verschiedene Befestigungseinrichtungen, umfassen.

Durch die Befestigung ergibt sich in vorteilhafter Weise ein lagesicherer Transport des Prüfkörpers durch verschiedene Erfassungsbereiche. Dies ist insbesondere dann von Vorteil, wenn die Prüfung eines Prüfmerkmals durch verschiedene Prüfeinrichtungen abhängig von der Lage des jeweiligen Merkmals im Erfassungsbereich einer Prüfeinrichtung ist.

Die Befestigungseinrichtung kann als Halterung oder Haltevorrichtung für einen Prüfkörper ausgebildet ist, wobei die Halterung oder Haltevorrichtung an einer Auflagefläche befestigt oder in diese integriert ist. Die Befestigungseinrichtung kann beispielsweise wie eine in der DE 100 63 313 A1 offenbarte Haltevorrichtung oder eine in der DE 10 2013 101 622 A1 offenbarte Halterung ausgebildet sein. Diese kann insbesondere derart angeordnet sein, dass ein auf einer Auflagefläche angeordneter Prüfkörper gehaltert werden kann.

In einer bevorzugten Ausführungsform ist die Befestigungseinrichtung als Ansaugeinrichtung ausgebildet. Die Ansaugeinrichtung kann beispielsweise derart angeordnet und/oder ausgebildet sein, dass der Prüfkörper im aktivierten Zustand der Ansaugeinrichtung an die Auflagefläche angesaugt wird. Je nach Gewicht des Prüfkörpers können hierzu verschiedene Ansaugdrücke einstellbar sein. Es kann weiterhin möglich sein, einen an der Auflagefläche anliegenden Prüfkörper durch die Ansaugeinrichtung von der Auflagefläche abzublasen. Hierdurch kann ein Prüfkörper von der Auflagefläche entfernt werden.

Die Ansaugeinrichtung kann somit mindestens eine Druckerzeugungseinrichtung zur Erzeugung eines Unterdrucks und gegebenenfalls eines Überdrucks umfassen. Diese Druckerzeugungseinrichtung kann hierbei fluidtechnisch mit der Auflagefläche verbunden sein.

Durch die Ausbildung der Befestigungseinrichtung als Ansaugeinrichtung ergibt sich eine zuverlässige Befestigung, die gleichzeitig die Gefahr einer Beschädigung des Prüfkörpers durch die Befestigung minimiert und eine Beeinträchtigung der Erfassung, beispielsweise eine Beeinträchtigung der optischen Erfassung durch Teile der Befestigungseinrichtung, reduziert.

In einer weiteren Ausführungsform weist die Auflagefläche mindestens eine Ansaugöffnung auf. Vorzugsweise kann die Auflagefläche mehrere Ansaugöffnungen aufweisen. Beispielsweise kann die Auflagefläche perforiert ausgebildet sein. Durch die mindestens eine Ansaugöffnung kann ein Unterdruck und gegebenenfalls auch ein Überdruck im Bereich der Auflagefläche bereitgestellt werden.
Hierdurch ergibt sich in vorteilhafter Weise eine mechanisch einfach zu realisierende Ausbildung der Ansaugeinrichtung. Dies wiederum reduziert Bauraumanforderungen und Herstellungskosten.

In einer weiteren Ausführungsform ist die Befestigungseinrichtung oder eine weitere Befestigungseinrichtung als Klemmeinrichtung ausgebildet. Durch die Klemmeinrichtung kann der Prüfkörper an die Auflagefläche geklemmt werden, beispielsweise durch einen Form- und/oder Kraftschluss. Beispielsweise kann eine Klemmeinrichtung mindestens ein Klemmelement umfassen, durch welches ein auf der Auflagefläche angeordneter Prüfkörper an die Auflagefläche geklemmt werden kann. Das Klemmelement kann insbesondere als Klemmschiene ausgebildet sein, durch die ein Randbereich des Prüfkörpers an die Auflagefläche geklemmt wird.

Weiter ist es vorstellbar, dass die Klemmeinrichtung ein erstes und mindestens ein weiteres Klemmelement umfasst, wobei durch die verschiedenen Klemmelemente verschiedene Teilbereiche, insbesondere Randbereiche, des Prüfkörpers an die Auflagefläche klemmbar sind. Dies ermöglicht z.B. ein Umblättern von Seiten eines buchartigen Prüfkörpers im befestigten Zustand. Ein Klemmelement kann in einen Klemmzustand oder in einen Freigabezustand versetzt werden.

Beispielsweise kann ein erstes Klemmelement oder eine erste Menge von Klemmelementen im Klemmzustand eine erste Seite einer Doppelseite des buchartigen Prüfkörpers an die Auflagefläche klemmen, während die weitere Seite der Doppelseite durch ein weiteres Klemmelement oder eine weitere Menge von Klemmelementen im Freigabezustand nicht geklemmt ist. Diese kann, beispielsweise durch eine geeignete Einrichtung zum Umblättern, umgeblättert bzw. aufgeblättert werden. Nach dem Aufblättern kann dann die weitere Seite einer aufgeblätterten weiteren Doppelseite durch das mindestens eine weitere Klemmelement an die Auflagefläche geklemmt werden. Dann kann das mindestens eine erste Klemmelement, welches die erste Seite der ersten Doppelseite klemmt, in den Freigabezustand versetzt werden und das Umblättern beendet werden. Weiter kann dann das mindestens eine erste Klemmelement in den Klemmzustand versetzt werden, um die erste Seite der weiteren Doppelseite zu klemmen.

Durch ein Klemmen ergibt sich in vorteilhafter Weise eine einfache und zuverlässige Befestigung des Prüfkörpers an der Auflagefläche.

In einer bevorzugten Ausführungsform ist die Transporteinrichtung als Prisma ausgebildet. Ein Prisma kann in diesem Fall einen geometrischen Körper bezeichnen, dessen Seitenkanten parallel und gleich lang sind und der ein Vieleck als Grundfläche hat. Vorzugsweise ist die Transporteinrichtung als gerades Prisma ausgebildet. Mantelflächen des Prismas können hierbei jeweils eine Auflagefläche umfassen oder ausbilden. Weiter kann die Rotationsachse der Transporteinrichtung parallel, insbesondere konzentrisch, zur zentralen Symmetrieachse des Prismas angeordnet sein.

Hierdurch ergibt sich in vorteilhafter Weise eine bauraumreduzierende Ausbildung der Transporteinrichtung bei gleichzeitiger Bereitstellung mehrerer Auflageflächen.

In einer weiteren Ausführungsform ist in einem Innenvolumen der Transporteinrichtung eine Prüfeinrichtung oder zumindest ein Teil davon angeordnet. Die Prüfeinrichtung kann hierbei insbesondere derart angeordnet und/oder ausgebildet sein, dass die Erfassung des Prüfmerkmals durch die Mantelfläche des Hohlkörpers oder durch eine Öffnung in der Mantelfläche hindurch möglich ist. Beispielsweise kann die Prüfeinrichtung als elektrische Prüfeinrichtung ausgebildet sein.

In einer weiteren Ausführungsform weist die Auflagefläche eine Durchgangsöffnung zum Innenvolumen auf. Die Durchgangsöffnung kann hierbei die vorhergehend erläuterte Ansaugöffnung ausbilden. Allerdings kann die Durchgangsöffnung auch von einer Ansaugöffnung verschieden sein. Eine Dimension der Durchgangsöffnung kann insbesondere kleiner als eine Dimension eines Prüfkörpers, beispielsweise eines Prüfkörpers im ID1-Format, gewählt werden. Hierdurch wird ein Hindurchfallen des Prüfkörpers durch die Durchgangsöffnung verhindert. Durch die Durchgangsöffnung hindurch kann eine Erfassung des auf der Auflagefläche angeordneten Prüfkörpers, insbesondere eine optische Erfassung, möglich sein. Weiter kann durch die Durchgangsöffnung ein Unter- oder Überdruck im Bereich der Auflagefläche bereitgestellt werden.

Alternativ oder kumulativ kann ein Mantelabschnitt der Transporteinrichtung aus einem transparenten Material ausgebildet sein, insbesondere wenn die Transporteinrichtung gemäß der Erfindung als Hohlkörper ausgebildet ist oder einen Hohlkörper umfasst. Mit anderen Worten kann ein Abschnitt der Transporteinrichtung, der die Auflagefläche oder zumindest ein Teil davon aufweist oder ausbildet, aus dem optisch transparenten Material ausgebildet sein.
Der Mantelabschnitt kann hierbei insbesondere aus einem für Weißlicht und/oder UV-Licht und/oder IR-Licht transparenten Material ausgebildet sein. Insbesondere können alle Mantelwände der Transporteinrichtung aus einem optisch transparenten Material ausgebildet sein. Alternativ oder kumulativ kann das Material ein elektrisch nichtleitfähiges Material sein.

Insbesondere in diesem Fall kann ein Prüfmerkmal von einer im Innenvolumen angeordneten Prüfeinrichtung geprüft werden. Insbesondere kann eine solche Prüfeinrichtung eine optische Prüfeinrichtung sein. Weiter wird in vorteilhafter Weise ermöglicht, den Prüfkörper in der entsprechenden Raumlage im Erfassungsbereich der im Innenvolumen angeordneten Prüfeinrichtung sowie im Erfassungsbereich einer im Außenvolumen angeordneten Prüfeinrichtung zu positionieren. Hierdurch können beispielsweise Vorder- und Rückseite des Prüfkörpers gleichzeitig, insbesondere optisch, geprüft werden.

Liegt z.B. ein buchartiger Prüfkörper im geöffneten Zustand mit der Vorder- und Rückseite des Einbandteils an der Auflagefläche an, so kann eine Prägung im Bereich der Vorderseite durch die Durchgangsöffnung oder den transparenten Abschnitt optisch erfasst werden. Gleichzeitig können Datenseiten des Prüfkörpers von einer weiteren Prüfeinrichtung z.B. optisch erfasst werden.

In einer weiteren Ausführungsform ist in einem Innenvolumen der Transporteinrichtung eine Einrichtung zur Erzeugung eines Unterdrucks oder zumindest ein Teil davon angeordnet. Diese Einrichtung kann selbstverständlich auch zur Erzeugung eines Überdrucks dienen. Somit ist es möglich, dass im Innenvolumen der Transporteinrichtung die Einrichtung zur Erzeugung eines Unterdrucks sowie ein oder mehrere Prüfeinrichtungen angeordnet sind. Wie vorhergehend erläutert, kann durch die Einrichtung zur Erzeugung eines Unterdrucks ein Unterdruck im Bereich der Auflagefläche zum Ansaugen des Prüfkörpers, beispielsweise durch die Durchgangsöffnung und/oder eine davon verschiedene Ansaugöffnung hindurch, bereitgestellt werden.

Dies ermöglicht in vorteilhafter Weise eine bauraumreduzierende Ausbildung der vorgeschlagenen Vorrichtung.

In einer weiteren Ausführungsform ist mindestens eine der Prüfeinrichtungen eine Einrichtung zur optischen Prüfung, wobei mindestens eine weitere Prüfeinrichtung eine Einrichtung zur elektrischen Prüfung ist. Durch eine elektrische Prüfung kann insbesondere zur Prüfung einer elektrischen Eigenschaft des Prüfkörpers oder eines Merkmals dienen. Auch kann eine elektrische Prüfung das Auslesen von Informationen aus dem Prüfkörper, insbesondere ein RFID-basiertes Auslesen, und gegebenenfalls den Vergleich mit Soll-Informationen umfassen. Somit kann das elektrische Prüfen auch ein elektronisches Prüfen beinhalten.

Die Einrichtung zur optischen Prüfung kann mindestens eine Bilderfassungseinrichtung umfassen. Weiter kann die Einrichtung zur optischen Prüfung mindestens eine Beleuchtungseinrichtung umfassen. Hierbei ist möglich, dass die Einrichtung zur optischen Prüfung eine Einrichtung zur Erfassung von Weißlicht, UV-Licht oder IR-Licht ist oder umfasst. Weiter kann eine Beleuchtungseinrichtung eine Einrichtung zur Erzeugung von Weißlicht, UV-Licht oder IR-Licht sein. Weiter kann die Einrichtung zur optischen Prüfung, insbesondere die Bilderfassungseinrichtung dieser Einrichtung, eine optische Erfassung mit niedriger Auflösung, beispielsweise einer Auflösung von bis zu 10 Megapixeln ermöglichen. Eine weitere Einrichtung zur optischen Prüfung, insbesondere die Bilderfassungseinrichtung dieser weiteren Einrichtung, kann eine optische Erfassung mit hoher Auflösung, beispielsweise einer Auflösung größer als 10 Megapixeln, ermöglichen.

Die Einrichtung zur elektrischen Prüfung kann insbesondere eine RFID-Leseeinrichtung sein. Diese ermöglicht insbesondere ein Auslesen von Daten aus einer RFID-Einrichtung des Prüfkörpers.

Hierdurch ergibt sich in vorteilhafter Weise eine möglichst vollständige Qualitätsprüfung des Prüfkörpers, während dieser durch die Transporteinrichtung transportiert wird.

In einer weiteren Ausführungsform umfasst die Vorrichtung mindestens eine Einrichtung zur Abtrennung der Erfassungsbereiche. Die Einrichtung zur Abtrennung kann insbesondere als Trennwand ausgebildet sein. Die Einrichtung zur Abtrennung kann insbesondere lichtundurchlässig sein. Weiter kann die Einrichtung zur Abtrennung undurchlässig für ein elektrisches Feld sein. Die Einrichtung zur Abtrennung kann zwischen zwei Prüfeinrichtungen bzw. deren Erfassungsbereichen angeordnet sein. Die Einrichtung zur Abtrennung kann hierbei an der Transporteinrichtung befestigt sein. Allerdings ist es auch vorstellbar, dass die Einrichtung zur Abtrennung nicht an der Transporteinrichtung befestigt ist. In diesem Fall kann die Einrichtung zur Abtrennung ortsfest und nicht mit der Transporteinrichtung rotierbar angeordnet sein.

Hierdurch ergibt sich in vorteilhafter Weise eine zuverlässigere Erfassung von Prüfmerkmalen, da eine gegenseitige Beeinflussung verschiedenen Prüfeinrichtungen verringert wird.

In einer weiteren Ausführungsform umfasst die Vorrichtung mindestens eine Zuführeinrichtung zur Zuführung des Prüfkörpers. Die Auflagefläche ist durch eine Rotation um die Rotationsachse in eine Übergabe-Raumlage positionierbar. Weiter ist mittels der Zuführeinrichtung ein Prüfkörper auf der Auflagefläche in der Übergabe-Raumlage anordenbar. Alternativ oder kumulativ umfasst die Vorrichtung mindestens eine Entnahmeeinrichtung zur Entnahme des Prüfkörpers. Die Auflagefläche ist durch eine Rotation um die Rotationsachse in eine Entnahme-Raumlage positionierbar. Mittels der Entnahmeeinrichtung ist ein auf der Auflagefläche angeordneter Prüfkörper von der Auflagefläche entnehmbar. Die Zuführeinrichtung und die Entnahmeeinrichtung können hierbei als voneinander verschiedene Einrichtungen ausgebildet sein. Alternativ kann jedoch die Zuführeinrichtung die Entnahmeeinrichtung ausbilden. Weiter kann die Übergabe-Raumlage der Entnahme-Raumlage entsprechen. Selbstverständlich kann jedoch die Übergabe-Raumlage auch von der Entnahme-Raumlage verschieden sein.

Somit kann es möglich sein, dass ein Prüfkörper durch die Zuführeinrichtung auf einer Auflagefläche der Transporteinrichtung positioniert wird, wobei die Transporteinrichtung dann diesen Prüfkörper in verschiedene Raumlagen positioniert, in denen dieser jeweils in Erfassungsbereichen verschiedener Prüfeinrichtungen angeordnet ist. Nach dem Transport durch diese verschiedenen Erfassungsbereiche kann dann wiederum der Prüfkörper durch die Entnahmeeinrichtung von der Auflagefläche entnommen werden. Hierdurch ergibt sich in vorteilhafter Weise eine konstruktionstechnisch einfache Integration der Vorrichtung in den Herstellungsprozess des Prüfkörpers.

In einer weiteren Ausführungsform umfasst die Vorrichtung mindestens eine Einrichtung zum Umblättern von Seiten des Prüfkörpers und/oder eine Einrichtung zum Umlegen des Prüfkörpers. Hierbei kann es möglich sein, dass durch die Einrichtung zum Umblättern von Seiten des Prüfkörpers der Prüfkörper von der Auflagefläche abgenommen wird, ein Umblättern erfolgt und der Prüfkörper wieder auf der Auflagefläche angeordnet wird. Selbstverständlich kann das Umblättern jedoch auch erfolgen, während der Prüfkörper auf der Auflagefläche angeordnet ist.

Die Einrichtung zum Umlegen des Prüfkörpers kann beispielsweise den auf der Auflagefläche angeordneten Prüfkörper verdrehen. Auch kann es möglich sein, den Prüfkörper von der Vorder- auf die Rückseite zu drehen.

Die Einrichtung zum Umblättern kann beispielsweise wie die in der WO 2015/074987 A1 offenbarte Spreizvorrichtung ausgebildet sein. Diese kann insbesondere derart angeordnet sein, dass ein auf einer Auflagefläche angeordneter Prüfkörper aufgeschlagen oder umgeblättert werden kann.

Hierdurch ergibt sich in vorteilhafter Weise, dass verschiedene Abschnitte des Prüfkörpers oder verschiedene Teile des Prüfkörpers durch die Vorrichtung geprüft werden können.

Weiter vorgeschlagen wird ein Verfahren zur Qualitätsprüfung eines dokumentenartigen Prüfkörpers. Hierbei wird der Prüfkörper auf einer Auflagefläche einer Transporteinrichtung einer Vorrichtung gemäß einer der in dieser Offenbarung erläuterten erfindungsgemäßen Ausführungsformen angeordnet. Weiter wird die Auflagefläche durch eine Rotation um eine Rotationsachse in eine erste Raumlage positioniert, wobei mittels einer ersten Prüfeinrichtung mindestens ein erstes Prüfmerkmal geprüft wird. Weiter wird die Auflagefläche durch eine Rotation um die Rotationsachse in eine weitere Raumlage positioniert, wobei mittels einer weiteren Prüfeinrichtung mindestens ein weiteres Prüfmerkmal geprüft wird. Dies wurde bereits erläutert.

Es ist möglich, ein Soll-Merkmal in Abhängigkeit einer Prüfkörperidentität, beispielsweise in Abhängigkeit einer Dokumentennummer, zu bestimmen. Ein solches Merkmal kann auch als prüfkörperspezifisches Merkmal bezeichnet werden. Weiter kann es möglich sein, ein Soll-Merkmal in Abhängigkeit eines Prüfkörpertyps, beispielsweise eines Dokumententyps, zu bestimmen. Ein solches Merkmal kann auch als prüfkörpertypspezifisches Merkmal bezeichnet werden.

Somit kann es möglich sein, dass im Verfahren, insbesondere vor der Prüfung oder bei Beginn der Prüfung, eine Prüfkörperidentität, beispielsweise eine Dokumentennummer, bestimmt wird. Dies kann beispielsweise im Rahmen einer Prüfung eines Prüfmerkmals erfolgen. In Abhängigkeit der Prüfköperidentität können weitere Soll-Merkmale des Prüfkörpers bestimmt werden, beispielsweise trägerspezifische Daten wie z.B. ein Name, ein Geburtsdatum, ein Gewicht, eine Größe und weitere Daten. Diese Soll-Merkmale können beispielsweise aus einer Speichereinrichtung ausgelesen werden. Die Vorrichtung zur Qualitätsprüfung kann hierbei die Speichereinrichtung umfassen oder datentechnisch mit der Speichereinrichtung verbunden sein.

Beispielsweise kann eine Prüfkörperidentität, insbesondere eine Dokumentennummer, optisch und/oder elektrisch, beispielsweise durch ein RFID-basiertes Auslesen, bestimmt werden. Weiter kann bestimmt werden, ob die verschiedenartig bestimmten Dokumentennummern übereinstimmen.

Prüfkörperspezifische Merkmale können beispielsweise eine Lage und/oder Orientierung eines Elements des Prüfkörpers relativ zu dem Prüfkörper, eine Farbe eines Elements, eine grafische Ausgestaltung eines Elementsund/oder ein von dem Element kodierte Information sein. Ein prüfkörpertypspezifisches Merkmal kann beispielsweise eine Materialzusammensetzung oder eine Anordnung grafischer Elemente etc. umfassen. Selbstverständlich sind dem Fachmann weitere prüfkörperspezifische und prüfkörpertypspezifische Merkmale sowie weitere zu prüfende Merkmale bekannt. Weiter kann in einem Zuführschritt der Prüfkörper auf der Auflagefläche angeordnet werden. Hierzu kann die Auflagefläche in die Übergabe-Raumlage positioniert werden. Nach der Anordnung kann die Auflagefläche durch Rotation in die erste Raumlage positioniert werden. Weiter kann der Prüfkörper in einem Entnahmeschritt von der Auflagefläche entnommen werden. Hierzu kann die Auflagefläche in die Entnahme-Raumlage positioniert werden.

Weiter kann der Prüfkörper an der Auflage befestigt, beispielsweise an die Auflagefläche angesaugt und/oder geklemmt, werden.

In einer weiteren Ausführungsform wird die Transporteinrichtung getaktet rotiert, wobei die Transporteinrichtung in einem Takt um einen vorbestimmten Winkel rotiert wird. Insbesondere wird die Transporteinrichtung in einem Takt derart rotiert, dass die Auflagefläche in einen weiteren Erfassungsbereich positioniert wird. Zwischen den Takten kann dann die Prüfung mindestens eines Prüfmerkmals durch die Prüfeinrichtung mit dem entsprechenden Erfassungsbereich erfolgen.

Alternativ ist es selbstverständlich auch möglich, dass die Transporteinrichtung kontinuierlich rotiert wird. Hierbei kann die Rotationsgeschwindigkeit derart gewählt werden, dass eine zuverlässige Prüfung erfolgen kann, wenn die Auflagefläche durch den Erfassungsbereich der Prüfeinrichtung bewegt wird.

Die Erfindung wird anhand eines Ausführungsbeispiels näher erläutert. Die Figuren zeigen:
Fig. 1 eine schematische Seitenansicht einer nicht erfindungsgemäßen Vorrichtung,
Fig. 2 eine schematische Seitenansicht einer erfindungsgemäßen Vorrichtung in einer weiteren Ausführungsform und
Fig. 3 eine schematische Seitenansicht einer erfindungsgemäßen Vorrichtung in einer weiteren Ausführungsform.

Nachfolgend bezeichnen gleiche Bezugszeichen Elemente mit gleichen oder ähnlichen technischen Merkmalen.

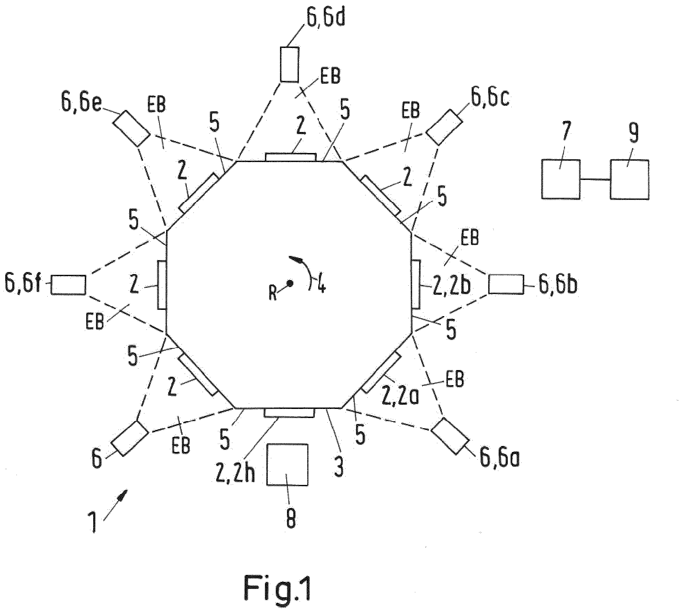

Fig. 1 zeigt eine schematische Seitenansicht einer nicht erfindungsgemäßen Vorrichtung 1. Die Vorrichtung 1 dient zur Qualitätsprüfung dokumentenartiger Prüfkörper 2. Die Vorrichtung 1 umfasst eine als Prisma ausgebildete Transporteinrichtung 3. Die Transporteinrichtung 3 weist hierbei eine achteckige Grundfläche auf. Die Transporteinrichtung 3 ist um eine Rotationsachse R rotierbar, wobei eine Rotationsrichtung durch einen Pfeil 4 angedeutet ist. Die äußere Mantelfläche der Transporteinrichtung 3 weist somit acht ebene Auflageflächen 5 auf.

Die Prüfkörper 2 sind hierbei auf diesen Auflageflächen 5 angeordnet.

Durch die Rotation der Transporteinrichtung 3 um die Rotationsachse R können die Prüfkörper 2 in verschiedenen Raumlagen positioniert werden.

Weiter dargestellt ist, dass die Vorrichtung 1 Prüfeinrichtungen 6 umfasst, wobei jede Prüfeinrichtung 6 einen Erfassungsbereich EB aufweist, der jeweils durch Strichlinien angedeutet ist. Durch die Positionierung der Prüfkörper 2 in verschiedenen Raumlagen sind die Prüfkörper 2 ebenfalls in Erfassungsbereichen EB verschiedener Prüfeinrichtungen 6 positionierbar. So ist beispielsweise ein erster Prüfkörper 2a in dem Erfassungsbereich EB einer ersten Prüfeinrichtung 6a angeordnet. Ein weiterer Prüfkörper 2b ist in dem Erfassungsbereich EB einer zweiten Prüfeinrichtung 6b angeordnet. Durch eine Rotation in Rotationsrichtung 4 kann der erste Prüfkörper 2a in den Erfassungsbereich EB der zweiten Prüfeinrichtung 6b positioniert werden. Hierzu kann die Transporteinrichtung 3 um einen vorbestimmten Winkel, beispielsweise einen Winkel von 45°, rotiert werden.

Die Prüfeinrichtungen 6 können hierbei voneinander verschieden sein. Beispielsweise kann die erste Prüfeinrichtung 6a eine Einrichtung zur optischen Prüfung sein, die eine Bilderfassungseinrichtung zur Erfassung von Weißlicht umfasst. Die zweite Prüfeinrichtung 6b kann ebenfalls eine Einrichtung zur optischen Prüfung sein, die eine Bilderfassungseinrichtung zur Erfassung von UV-Licht umfasst. Eine dritte Prüfeinrichtung kann ebenfalls eine Einrichtung zur optischen Prüfung sein, die eine Bilderfassungseinrichtung zur Erfassung von IR-Licht umfasst. Eine vierte Prüfeinrichtung 6d kann ebenfalls eine Einrichtung zur optischen Prüfung sein, die eine Bilderfassungseinrichtung zur Erzeugung von niedrig aufgelösten Bildern mit einer Auflösung von bis zu 10 Megapixeln umfasst. Eine fünfte Prüfeinrichtung 6e kann ebenfalls eine Einrichtung zur optischen Prüfung sein, die eine Bilderfassungseinrichtung zur Erzeugung von hochaufgelösten Bildern mit einer Auflösung größer als 10 Megapixeln umfasst.

Eine sechste Prüfeinrichtung 6f kann eine elektrische Prüfeinrichtung sein, insbesondere ein RFID-Lesegerät.

Weiter umfasst die Vorrichtung 1 eine Steuer- und Auswerteeinrichtung 7, die daten- und/oder signaltechnisch mit den Prüfeinrichtungen 6, der Transporteinrichtung 3 sowie einer Zuführ-/Entnahmeeinrichtung 8 verbunden sein kann. Weiter kann die Steuer- und Auswerteeinrichtung 7 mit einer Speichereinrichtung 9 verbunden sein.

Durch die erste Prüfeinrichtung 6a kann beispielsweise der im Erfassungsbereich EB angeordnete erste Prüfkörper 2a identifiziert werden. Beispielsweise kann eine Dokumentennummer dieses Prüfkörpers 2a optisch bestimmt werden.

In Abhängigkeit der Dokumentennummer kann die Steuer- und Auswerteeinrichtung 7 dann Soll-Merkmale des ersten Prüfkörpers 2a aus der Speichereinrichtung 9, die darin beispielsweise in Form einer Datenbank gespeichert sind, abrufen.

Diese Soll-Merkmale können beispielsweise Merkmale sein, die durch mindestens eine der Prüfeinrichtungen 6a, ..., 6f prüfbar sind. Beispielsweise können mittels der ersten Prüfeinrichtung ebenfalls Inhalte eines maschinenlesbaren Abschnitts des ersten Prüfkörpers 2a optisch bestimmt werden. Diese Inhalte können ein Merkmal darstellen, welches dann mit dem entsprechenden Soll-Merkmal verglichen wird.

Prüfmerkmale können sichtbare oder versteckte Merkmale sein. Auch können Merkmale sogenannte Sicherheitsmerkmale sein. Weiter kann die sechste Prüfeinrichtung 6f in einem RFID-basierten Auslesevorgang eine in dem entsprechenden Prüfkörper gespeicherte Dokumentennummer auslesen und diese mit der durch die erste Prüfeinrichtung 6a bestimmten Dokumentennummer vergleichen. Stimmen die Dokumentennummern überein, so kann eine gewünschte Qualität des Prüfkörpers detektierbar sein. Stimmen die Dokumentennummern nicht überein, so kann eine fehlende Qualität des Prüfkörpers 2 detektierbar sein.

Hierbei kann die Steuer- und Auswerteeinrichtung 7 auch Teil einer jeden Prüfeinrichtung 6 sein.

Weiter ist dargestellt, dass sich ein achter Prüfkörper 2h in einer Zuführ-/Entnahme-Raumlage befindet. Hat der in Fig. 1 dargestellte achte Prüfkörper 2h bereits alle Erfassungsbereiche EB der Prüfeinrichtungen 6 durchlaufen, so kann er durch die Zuführ-/Entnahmeeinrichtung von der entsprechenden Auflagefläche 5 abgenommen werden und einem im Herstellungsprozess folgenden Prozessschritt zugeführt werden. Dann kann ein noch ungeprüfter Prüfkörper 2 durch die Zuführ-/Entnahmeeinrichtung 8 auf der unbelegten Auflagefläche 5 platziert werden.

Nach oder während der Anordnung eines Prüfkörpers 2 auf der Auflagefläche 5 kann dieses an der Auflagefläche befestigt werden. Hierzu kann die Vorrichtung 1 nicht dargestellte mechanische Befestigungseinrichtungen umfassen. Diese mechanischen Befestigungseinrichtungen können beispielsweise den Prüfkörper 2 an die jeweilige Auflagefläche 5 klemmen.

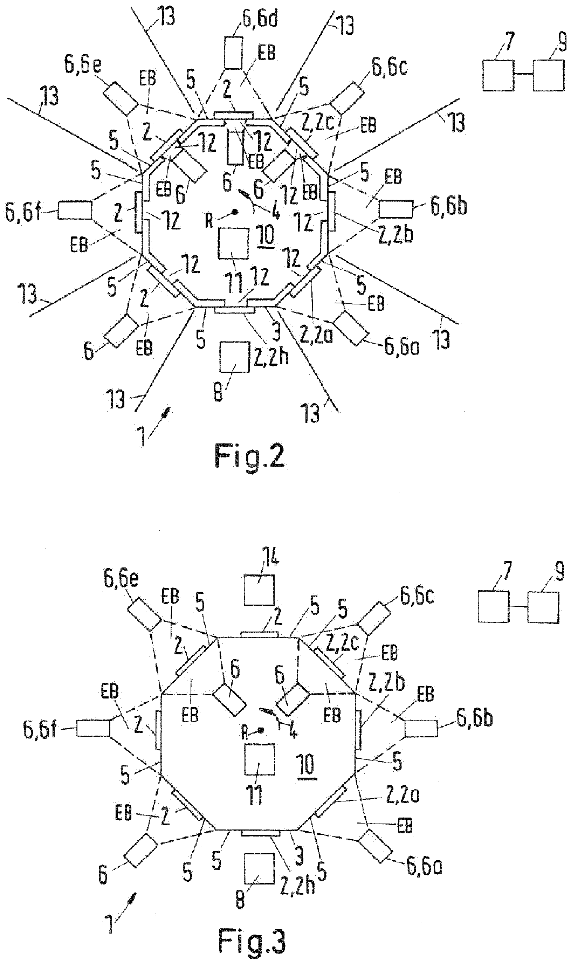

Fig. 2 zeigt eine schematische Seitenansicht einer erfindungsgemäßen Vorrichtung 1 in einer weiteren Ausführungsform. Im Unterschied zu der in Fig. 1 dargestellten Ausführungsform ist die als Prisma ausgebildete Transporteinrichtung 3 als Hohlkörper ausgebildet. In einem Innenvolumen 10 der hohlkörperförmigen Transporteinrichtung 3 ist eine Druckerzeugungseinrichtung 11 angeordnet. Mittels der Druckerzeugungseinrichtung 11 kann ein Unterdruck im Innenvolumen erzeugt werden. Weiter dargestellt ist, dass die Auflageflächen 5 jeweils eine Durchgangsöffnung 12 zum Innenvolumen 10 aufweisen. Über die Durchgangsöffnungen 12 kann der von der Druckerzeugungseinrichtung 11 erzeugte Unterdruck an der Auflagefläche 5 bereitgestellt werden. Hierdurch werden die Prüfkörper 2 an die Auflagefläche 5 angesaugt und an dieser befestigt. Das Ansaugen kann hierbei zusätzlich zur mechanischen Befestigung erfolgen. Selbstverständlich ist es jedoch auch möglich, dass die Prüfkörper nur angesaugt und nicht mechanisch befestigt werden.

Weiter umfasst die Vorrichtung 1 im Innenvolumen 10 angeordnete Prüfeinrichtungen 6. Weiter dargestellt sind die Erfassungsbereiche EB dieser im Innenvolumen 10 angeordneten Prüfkörper 6. Hierbei ist ersichtlich, dass die im Innenvolumen 10 angeordneten Prüfeinrichtungen ein Prüfmerkmal eines Prüfkörpers 2 durch die Durchgangsöffnung 12 hindurch erfassen können. Somit können diese Prüfeinrichtungen 6 beispielsweise als optische Prüfeinrichtungen ausgebildet sein. Hierbei ist dargestellt, dass in einer Raumlage, in der z.B. ein dritter Prüfkörper 2c im Erfassungsbereich EB einer dritten Prüfeinrichtung 6c angeordnet ist, eine der Auflagefläche 5 abgewandte Seite des Prüfkörpers 2 von der dritten Prüfeinrichtung 6c erfasst und geprüft werden kann. Ein Abschnitt der der Auflagefläche 5 zugewandten Seite des Prüfkörpers 2c ist von der im Innenvolumen 10 angeordneten Prüfeinrichtung 6 erfassbar und prüfbar ist.

Weiter dargestellt ist, dass die Vorrichtung 1 Trennwände 13 umfasst, die die verschiedenen Erfassungsbereiche EB voneinander abtrennen. Die Trennwände 13 können beispielsweise lichtundurchlässig ausgebildet sein.

Die Trennwände 13 sind hierbei ortsfest relativ zur rotierbaren Transporteinrichtung 3 angeordnet. Zwischen der äußeren Oberfläche der Transporteinrichtung 3 und den Trennwänden 13 ist ein Spalt vorgesehen, durch den der Prüfkörper 2 bei Rotation der Transporteinrichtung 3 bewegt wird.

In Fig. 3 ist eine schematische Seitenansicht einer erfindungsgemäßen Vorrichtung 1 in einer weiteren Ausführungsform dargestellt. Im Unterschied zu der in Fig. 2 dargestellten Ausführungsform umfasst die in Fig. 3 dargestellte Ausführungsform der Vorrichtung 1 keine Trennwände 13. Weiter weisen die Auflageflächen 5 keine Durchgangsöffnungen 12 auf. Vielmehr sind die Mantelwände der Transporteinrichtung 3, die wie in Fig. 2 als Hohlkörper ausgebildet ist, aus einem optisch transparenten Material ausgebildet. Nicht dargestellt sind Durchgangsöffnungen zur Bereitstellung eines Unterdrucks im Bereich der Auflageflächen 5.

Weiter umfasst die in Fig. 3 dargestellte Vorrichtung 1 eine Einrichtung 14 zum Umblättern eines buchartigen Prüfkörpers 2. Hierbei ist dargestellt, dass durch die Einrichtung 14 zum Umblättern ein einer Umblätter-Raumlage positionierter Prüfkörper 2 umgeblättert werden kann.

### Bezugszeichenliste

- 1: Vorrichtung
- 2, 2a, 2c: Prüfkörper
- 3: Transporteinrichtung
- 4: Pfeil
- 5: Auflagefläche
- 6, 6a, 6b, 6c, 6d, 6e, 6f: Prüfeinrichtung
- 7: Steuer- und Auswerteeinrichtung
- 8: Zuführ-/Entnahmeeinrichtung
- 9: Speichereinrichtung
- 10: Innenvolumen
- 11: Druckerzeugungseinrichtung
- 12: Durchgangsöffnung
- 13: Trennwand
- 14: Umblättereinrichtung
- R: Rotationsachse
- EB: Erfassungsbereich

## Patentansprüche

1. Vorrichtung zur Qualitätsprüfung eines dokumentenartigen Prüfkörpers (2), wobei die Vorrichtung (1) mindestens eine Transporteinrichtung (3) und eine erste Prüfeinrichtung (6, 6a) umfasst, wobei die Transporteinrichtung (3) mindestens eine Auflagefläche (5) für den Prüfkörper (2) aufweist, wobei die Auflagefläche (5) durch eine Rotation um eine Rotationsachse (R) in eine erste Raumlage und mindestens in eine weitere Raumlage positionierbar ist, wobei ein auf der Auflagefläche (5) angeordneter Prüfkörper (2) in der ersten Raumlage in einem Erfassungsbereich (EB) der ersten Prüfeinrichtung (6, 6a) angeordnet ist,
**dadurch gekennzeichnet, dass**
die Vorrichtung (1) mindestens eine weitere Prüfeinrichtung (6, 6a, 6b) umfasst, wobei ein auf der Auflagefläche (5) angeordneter Prüfkörper (2) in der weiteren Raumlage in einem Erfassungsbereich (EB) der weiteren Prüfeinrichtung (6, 6b) angeordnet ist, wobei die Transporteinrichtung (3) als Hohlkörper ausgebildet ist oder einen Hohlkörper umfasst.

2. Vorrichtung nach Anspruch 1, **dadurch gekennzeichnet, dass** die Vorrichtung (1) mindestens eine Befestigungseinrichtung zur Befestigung des Prüfkörpers (2) an der Auflagefläche (5) umfasst.

3. Vorrichtung nach Anspruch 2, **dadurch gekennzeichnet, dass** die Befestigungseinrichtung als Ansaugeinrichtung ausgebildet ist.

4. Vorrichtung nach Anspruch 3, **dadurch gekennzeichnet, dass** die Auflagefläche (5) mindestens eine Ansaugöffnung aufweist.

5. Vorrichtung nach einem der Ansprüche 2 bis 4, **dadurch gekennzeichnet, dass** die Befestigungseinrichtung oder eine weitere Befestigungseinrichtung als Klemmeinrichtung ausgebildet ist.

6. Vorrichtung nach einem der vorangegangen Ansprüche, **dadurch gekennzeichnet, dass** die Transporteinrichtung (3) als Prisma ausgebildet ist.

7. Vorrichtung nach einem der vorangegangenen Ansprüche, **dadurch gekennzeichnet, dass** in einem Innenvolumen (10) der Transporteinrichtung (3) eine Prüfeinrichtung (6) oder zumindest ein Teil davon angeordnet ist.

8. Vorrichtung nach einem der vorangegangenen Ansprüche, **dadurch gekennzeichnet, dass** die Auflagefläche (5) eine Durchgangsöffnung (12) zum Innenvolumen (10) aufweist und/oder mindestens ein Mantelabschnitt der Transporteinrichtung (3) aus einem transparenten Material ausgebildet ist.

9. Vorrichtung nach einem der vorangegangenen Ansprüche, **dadurch gekennzeichnet, dass** in einem Innenvolumen (10) der Transporteinrichtung (3) eine Einrichtung (11) zur Erzeugung eines Unterdrucks oder zumindest ein Teil davon angeordnet ist.

10. Vorrichtung nach einem der vorangegangenen Ansprüche, **dadurch gekennzeichnet, dass** mindestens eine der Prüfeinrichtungen (6, 6a, ..., 6e) eine Einrichtung zur optischen Prüfung ist, wobei mindestens eine weitere Prüfeinrichtung (6, 6f) eine Einrichtung zur elektrischen Prüfung ist.

11. Vorrichtung nach einem der vorangegangenen Ansprüche, **dadurch gekennzeichnet, dass** die Vorrichtung (1) mindestens eine Einrichtung zur Abtrennung der Erfassungsbereiche umfasst.

12. Vorrichtung nach einem der vorangegangenen Ansprüche, **dadurch gekennzeichnet, dass** die Vorrichtung mindestens eine Zuführeinrichtung (8) umfasst, wobei die Auflagefläche (5) durch eine Rotation um die Rotationsachse (R) in eine Übergabe-Raumlage positionierbar ist, wobei mittels der Zuführeinrichtung (8) ein Prüfkörper (2) auf der Auflagefläche (5) in der Übergabe-Raumlage anordenbar ist und/oder dass die Vorrichtung (1) mindestens eine Entnahmeeinrichtung (8) umfasst, wobei die Auflagefläche (5) durch eine Rotation um die Rotationsachse (R) in eine Entnahme-Raumlage positionierbar ist, wobei mittels der Entnahmeeinrichtung (8) ein auf der Auflagefläche (5) angeordneter Prüfkörper (2) von der Auflagefläche (5) entnehmbar ist.

13. Vorrichtung nach einem der vorangegangenen Ansprüche, **dadurch gekennzeichnet, dass** die Vorrichtung (1) mindestens eine Einrichtung (14) zum Umblättern von Seiten des Prüfkörpers (2) und/oder Einrichtung zum Umlegen des Prüfkörpers (2) umfasst.

14. Verfahren zur Qualitätsprüfung eines dokumentenartigen Prüfkörpers (2), wobei der Prüfkörper (2) auf einer Auflagefläche (5) einer Transporteinrichtung (3) einer Vorrichtung (1) gemäß einer der Ansprüche 1 bis 13 angeordnet wird, wobei die Auflagefläche (5) durch eine Rotation um eine Rotationsachse (R) in eine erste Raumlage positioniert wird, wobei mittels einer ersten Prüfeinrichtung (6, 6a) mindestens ein erstes Prüfmerkmal geprüft wird, wobei die Auflagefläche (5) durch eine Rotation um die Rotationsachse (R) in eine weitere Raumlage positioniert wird, wobei mittels einer weiteren Prüfeinrichtung (6, 6b) mindestens ein weiteres Prüfmerkmal geprüft wird.

## Claims

1. Device for quality inspection of a document-type test specimen (2), wherein the device (1) comprises at least one transport apparatus (3) and a first testing apparatus (6, 6a), wherein the transport apparatus (3) has a resting surface (5) for the test specimen (2), wherein the resting surface (5) can be positioned by a rotation about an axis of rotation (R) into a first spatial position and into at least one further spatial position, wherein a test specimen (2) arranged on the resting surface (5) in the first spatial position is arranged in a detection range (EB) of the first testing apparatus (6, 6a),
**characterised in that**
the device (1) comprises at least one further testing apparatus (6, 6a, 6b), wherein a test specimen (2) arranged on the resting surface (5) in the further spatial position is arranged in a detection range (EB) of the further testing apparatus (6, 6b), wherein the transport apparatus (3) is configured as a hollow body or comprises a hollow body.

2. Device according to claim 1, **characterised in that** the device (1) comprises at least one fastening apparatus for fastening the test specimen (2) to the resting surface (5).

3. Device according to claim 2, **characterised in that** the fastening apparatus is configured as a suction apparatus.

4. Device according to claim 3, **characterised in that** the resting surface (5) comprises at least one suction opening.

5. Device according to any of claims 2 to 4, **characterised in that** the fastening apparatus or a further fastening apparatus is configured as a clamping apparatus.

6. Device according to any one of the preceding claims, **characterised in that** the transport apparatus (3) is configured as a prism.

7. Device according to any one of the preceding claims, **characterised in that** a testing apparatus (6) or at least a part thereof is arranged in an inner volume (10) of the transport apparatus (3).

8. Device according to any one of the preceding claims, **characterised in that** the resting surface (5) comprises a passage opening (12) to the inner volume (10) and/or at least a section of the casing of the transport apparatus (3) is formed from a transparent material.

9. Device according to any one of the preceding claims, **characterised in that** an apparatus (11) for producing a negative pressure, or at least a part thereof, is arranged in an inner volume (10) of the transport apparatus (3).

10. Device according to any one of the preceding claims, **characterised in that** at least one of the testing apparatuses (6, 6a, ..., 6e) is an apparatus for optical testing, and wherein at least one further testing apparatus (6, 6f) is an apparatus for electrical testing.

11. Device according to any one of the preceding claims, **characterised in that** the device (1) comprises at least one apparatus for separating the detection ranges.

12. Device according to any one of the preceding claims, **characterised in that** the device comprises at least one delivery apparatus (8), wherein the resting surface (5) can be positioned by a rotation about the axis of rotation (R) into a transfer spatial position, whereby, by means of the delivery apparatus (8), a test specimen (2) can be arranged on the resting surface (5) and/or can be arranged in the transfer spatial position, and/or that the device (1) comprises at least one removal apparatus (8), wherein the resting surface (5) can be positioned by a rotation about the axis of rotation (R) into a removal spatial position, wherein, by means of the removal apparatus (8), a test specimen (2) arranged on the resting surface (5) can be removed from the resting surface (5).

13. Device according to any one of the preceding claims, **characterised in that** the device (1) comprises at least one apparatus (14) for turning over the pages of the test specimen (2) and/or an apparatus for turning over the test specimen (2).

14. Method for the quality inspection of a document-type test specimen (2), wherein the test specimen (2) is arranged on a resting surface (5) of a transport apparatus (3) of a device (1) according to any one of claims 1 to 13, wherein the resting surface (5) is positioned by a rotation about an axis of rotation (R) into a first spatial position, wherein, by means of a first testing apparatus (6, 6a), at least one first testing feature is tested, wherein the resting surface (5) is positioned by a rotation about the axis of rotation (R) into a further spatial position, wherein, by means of a further testing apparatus (6, 6b) at least one further testing feature is tested.

## Revendications

1. Dispositif de contrôle de la qualité d'un spécimen (2) de type document, dans lequel le dispositif (1) comprend au moins un système de transport (3) et un premier système de contrôle (6, 6a), dans lequel le système de transport (3) présente au moins une surface d'appui (5) pour le spécimen (2), dans lequel la surface d'appui (5) peut être positionnée dans une première position spatiale et au moins dans une autre position spatiale par une rotation autour d'un axe de rotation (R), dans lequel un spécimen (2) disposé sur la surface d'appui (5) est disposé, dans la première position spatiale, dans une zone de détection (EB) du premier système de contrôle (6, 6a),
**caractérisé en ce que**
le dispositif (1) comprend au moins un autre système de contrôle (6, 6a, 6b), dans lequel un spécimen (2) disposé sur la surface d'appui (5) est disposé, dans l'autre position spatiale, dans une zone de détection (EB) de l'autre système de contrôle (6, 6b), dans lequel le système de transport (3) est réalisé en tant que corps creux ou comprend un corps creux.

2. Dispositif selon la revendication 1, **caractérisé en ce que** le dispositif (1) comprend au moins un système de fixation pour fixer le spécimen (2) sur la surface d'appui (5) .

3. Dispositif selon la revendication 2, **caractérisé en ce que** le système de fixation est réalisé en tant que système d'aspiration.

4. Dispositif selon la revendication 3, **caractérisé en ce que** la surface d'appui (5) présente au moins une ouverture d'aspiration.

5. Dispositif selon l'une quelconque des revendications 2 à 4, **caractérisé en ce que** le système de fixation ou un autre système de fixation est réalisé en tant que système de serrage.

6. Dispositif selon l'une quelconque des revendications précédentes, **caractérisé en ce que** le système de transport (3) est réalisé en tant que prisme.

7. Dispositif selon l'une quelconque des revendications précédentes, **caractérisé en ce qu'**un système de contrôle (6) ou au moins une partie de celui-ci est disposé(e) dans un volume intérieur (10) du système de transport (3).

8. Dispositif selon l'une quelconque des revendications précédentes, **caractérisé en ce que** la surface d'appui (5) présente une ouverture de passage (12) menant vers le volume intérieur (10) et/ou au moins une section enveloppante du système de transport (3) est réalisée à partir d'un matériau transparent.

9. Dispositif selon l'une quelconque des revendications précédentes, **caractérisé en ce qu'**un système (11) pour produire une dépression ou au moins une partie de celui-ci est disposé(e) dans un volume intérieur (10) du système de transport (3).

10. Dispositif selon l'une quelconque des revendications précédentes, **caractérisé en ce qu'**au moins un des systèmes de contrôle (6, 6a, ..., 6e) est un système de contrôle optique, dans lequel au moins un autre système de contrôle (6, 6f) est un système de contrôle électrique.

11. Dispositif selon l'une quelconque des revendications précédentes, **caractérisé en ce que** le dispositif (1) comprend au moins un système de séparation des zones de détection.

12. Dispositif selon l'une quelconque des revendications précédentes, **caractérisé en ce que** le dispositif comprend au moins un système d'amenée (8), dans lequel la surface d'appui (5) peut être positionnée dans une position spatiale de transfert par une rotation autour de l'axe de rotation (R), dans lequel un spécimen (2) peut être disposé sur la surface d'appui (5) dans la position spatiale de transfert au moyen du système d'amenée (8) et/ou que le dispositif (1) comprend au moins un système de retrait (8), dans lequel la surface d'appui (5) peut être positionnée dans une position spatiale de retrait par une rotation autour de l'axe de rotation (R), dans lequel un spécimen (2) disposé sur la surface d'appui (5) peut être retiré de la surface d'appui (5) au moyen du système de retrait (8).

13. Dispositif selon l'une quelconque des revendications précédentes, **caractérisé en ce que** le dispositif (1) comprend au moins un système (14) pour tourner des pages du spécimen (2) et/ou un système pour plier le spécimen (2) .

14. Procédé de contrôle de la qualité d'un spécimen (2) de type document, dans lequel le spécimen (2) est disposé sur une surface d'appui (5) d'un système de transport (3) d'un dispositif (1) selon l'une quelconque des revendications 1 à 13, dans lequel la surface d'appui (5) est positionnée dans une première position spatiale par une rotation autour d'un axe de rotation (R), dans lequel au moins une première caractéristique de contrôle est contrôlée au moyen d'un premier système de contrôle (6, 6a), dans lequel la surface d'appui (5) est positionnée dans une autre position spatiale par une rotation autour de l'axe de rotation (R), dans lequel au moins une autre caractéristique de contrôle est contrôlée au moyen d'un autre système de contrôle (6, 6b).
